# EUROPÄISCHE PATENTSCHRIFT

(11) **EP 4 307 018 B1**
(45) Veröffentlichungstag und Bekanntmachung des Hinweises auf die Patenterteilung: **10.09.2025**
(21) Anmeldenummer: 22185045.6
(22) Anmeldetag: 14.07.2022
(51) Int. Cl.: G01V 8/20

(54) **LICHTGITTER MIT DISTANZMESSUNG**
LIGHT GRID WITH DISTANCE MEASUREMENT
GRILLE LUMINEUSE À MESURE DE DISTANCE

(43) Veröffentlichungstag der Anmeldung: 17.01.2024
(73) Patentinhaber: Cedes AG, 7302 Landquart (CH)
(72) Erfinder: von Allmen, Andri, 7302 Landquart (CH); Zhang, Nannan, 215500 Changshu Jiangsu (CN)
(74) Vertreter: RavensPAT Patentanwälte Partnerschaft mbB

(56) Entgegenhaltungen:
- CN-A- 111 273 371
- DE-A1- 102012 109 985
- US-A1- 2005 133 702
- US-A1- 2011 204 211
- US-A1- 2016 178 794

## Beschreibung

Die Erfindung betrifft ein Lichtgitter zur Objekterkennung.

Aus dem Stand der Technik sind Lichtgitter bekannt, welche eine Senderleiste und eine Empfängerleiste aufweisen und zwischen diesen ein Gitter aus Lichtstrahlen zur Objekterkennung ausbilden. Insbesondere können eine oder beide Leisten des Lichtgitters an der Schiebetüre oder den Schiebetüren einer Aufzugskabine befestigt sein, um den Durchgang eines Objekts durch den geöffneten Türbereich zu detektieren. CN 111 273 371 A beschreibt ein Detektionssystem mit einem Lichtgitter.

Es ist Aufgabe der Erfindung, ein Lichtgitter bereitzustellen, das mit geringem Kostenaufwand eine differenziertere Überwachung ermöglicht.

Diese Aufgabe wird, ausgehend von einem Lichtgitter der eingangs genannten Art, durch ein Lichtgitter nach Anspruch 1 gelöst. Vorteilhafte Ausgestaltungen sind in den weiteren abhängigen Ansprüchen angegeben.

Das erfindungsgemäße Lichtgitter ist ein Lichtgitter zur Bestimmung des Abstandes zwischen Sender- und Empfängerleiste mit einer Senderleiste mit einem oder mehreren Senderelementen, welche Strahlung mit einer bestimmten Intensität aussenden, mit einer Empfängerleiste mit einem oder mehreren Empfängerelementen, welche die Strahlung eines zugeordneten Senderelements empfangen, und mit einer Steuereinrichtung zur Ansteuerung der Senderelemente und/oder der Empfängerelemente und zur Auswertung der Empfängerelemente, wobei jeweils das Senderelement und das Empfängerelement oder jeweils wenigstens eines der Senderelemente und/oder wenigstens eines der Empfängerelemente als qualifizierte Sender- und Empfängerelemente ausgebildet sind, wobei das qualifizierte Senderelement oder die qualifizierten Senderelemente dazu ausgebildet sind, unterschiedliche Intensitäten auszusenden und/oder das qualifizierte Empfängerelement oder die qualifizierten Empfängerelemente dazu ausgebildet sind, unterschiedliche Verstärkungen anzuwenden und einen Intensitätswert für die empfangene und verstärkte Strahlung auszugeben, und die Steuereinrichtung dazu ausgebildet ist, unterschiedliche Kombinationen von Intensitäten und Verstärkungen der qualifizierten Sender- und/oder Empfängerelemente anzusteuern und einen Abstandswert in Abhängigkeit von der Summe der resultierenden Intensitätswerte der angesteuerten Kombinationen zu ermitteln.

Dies kann den Vorteil ausbilden, dass der Abstand zwischen der Sender- und Empfängerleiste ermittelt werden kann. Gleichzeitig können aber auch dynamische Abläufe sehr gut verfolgt und analysiert werden. Das Gitter wiederum büßt dabei keinerlei Sicherheitsanforderungen ein.

Vorzugsweise weist das Lichtgitter, insbesondere die Sender- und Empfängerleiste noch mindestens ein oder mehrere weitere Sender- und Empfängerelemente auf, die jeweils als einfache Senderelemente und einfache Empfängerelemente ausgebildet sind und welche jeweils als Lichtschranke ausgebildet sind und welche vorzugsweise nicht zu den Kombinationen beitragen und/oder aus denen nicht der Abstandswert ermittelt wird, und/oder welche zu Objektdetektion verwendet werden, und/oder deren einfache Senderelemente mindestens eine Intensität aussenden wie die qualifizierten Senderelemente und deren Empfängerelemente mindestens eine Verstärkung aufweisen wie die qualifizierten Empfängerelemente.

Dies kann den Vorteil ausbilden, dass das Lichtgitter zur Objektdetektion benutzt werden kann. Dies kann den Vorteil ausbilden, dass nicht alle Sender- und Empfängerelemente qualifiziert ausgebildet sein müssen, womit die Komplexität des Lichtgitters sinkt und Kosten gespart werden können. Ein solches Ausführungsbeispiel der Erfindung ermöglicht aber auch einen Kompromiss zwischen genauer Objekterkennung und einem Kostenvorteil, der dadurch zustande kommt, dass nicht alle Sender- bzw. Empfängerelemente mit den gleichen Funktionen ausgestattet sein müssen, sondern einzelne Elemente auch kostengünstiger mit weniger Funktionen ausgestattet sein können.

Erfindungsgemäß ist die Steuereinrichtung dazu ausgebildet, die Kombinationen nacheinander in einer Sequenz anzusteuern und insbesondere die Sequenz periodisch zu wiederholen und insbesondere die Summe von den angesteuerten Kombinationen einer Sequenz zu ermitteln und insbesondere für jede Sequenz einen Abstandswert zu ermitteln. Vorzugsweise ist die Steuereinrichtung dazu ausgebildet, alle unterschiedlichen Kombinationen von Intensitäten und Verstärkungen der qualifizierten Sender- und/oder Empfängerelemente anzusteuern, insbesondere jedoch, ohne die höchste Intensität der qualifizierten Senderelemente für die Kombinationen zu verwenden, und/oder diejenigen Intensitäten und Verstärkungen der qualifizierten Sender- und Empfängerelemente für die Objekterkennung zu verwenden, welche den Intensitäten und Verstärkungen von einfachen (nicht qualifizierten) Sender- und/oder Empfängerelementen entsprechen.

Dies kann die Vorteile ausbilden, dass ein Zeitraum feststeht, nachdem der Abstandswert vorliegt, dass der Abstandswert quasikontinuierlich wiederholt ermittelt wird, dass der Abstandswert dynamisch in zeitlicher Abfolge vorliegt. Dies kann die Vorteile ausbilden, dass die Berechnung des Abstandswertes einfach und schnell erfolgen kann. Dies kann den Vorteil ausbilden, dass eine maximale Auflösung bzw. Genauigkeit für den Abstandswert erreicht wird. Dies kann den Vorteil ausbilden, dass die Anzahl der für die Objekterkennung nötigen Sender- und Empfängerelemente durch die qualifizierten Sender- und Empfängerelemente nicht erhöht werden muss.

Vorzugsweise sind die ein oder mehreren qualifizierten Senderelemente dazu ausgebildet jeweils einzeln mehrere unterschiedliche Intensitäten auszusenden, und/oder zueinander unterschiedliche Intensitäten auszusenden, und/oder jeweils eine gleiche Intensität auszusenden, welche insbesondere die höchste Intensität ist und insbesondere der Intensität der nicht qualifizierten Senderelemente entspricht.

Dies kann den Vorteil ausbilden, dass für verschiedene Abstandsbereiche optimierte Intensitäten zur Verfügung stehen, dass die Auflösung des Abstandswertes erhöht wird, dass die Auflösung des Abstandswertes über den gesamten Bereich des Abstandes gleichmässig konstant ist. Dies kann den Vorteil ausbilden, dass die qualifizierten Senderelemente auch für die Objekterkennung verwendet werden können.

Vorzugsweise sind die ein oder mehreren qualifizierten Empfängerelemente dazu ausgebildet, jeweils einzeln mehrere unterschiedliche Verstärkungen anzuwenden, und/oder dieselben unterschiedlichen Verstärkungen anzuwenden, und/oder jeweils eine gleiche Verstärkung anzuwenden, welche insbesondere die höchste ist, und insbesondere der Verstärkung der nicht qualifizierten, d.h. einfachen Empfängerelemente entspricht.

Dies kann den Vorteil ausbilden, dass für verschiedene Abstandsbereiche optimierte Verstärkungen zur Verfügung stehen, dass die Auflösung des Abstandswertes erhöht wird, dass die Auflösung des Abstandswertes über den gesamten Bereich des Abstandes gleichmässig konstant ist. Dies kann den Vorteil ausbilden, dass die qualifizierten Empfängerelemente auch für die Objekterkennung verwendet werden können.

Vorzugsweise weist das Lichtgitter jeweils drei qualifizierte Sender- und Empfängerelemente und dazu noch weitere einfache Sender- und Empfängerelemente auf, welche nicht zu den Kombinationen beitragen und/oder aus denen nicht der Abstandswert ermittelt wird. Vorzugsweise sind die ein oder mehreren qualifizierten Senderelemente dazu ausgebildet, jeweils drei Intensitäten auszusenden, wobei eine Intensität der Intensität der nicht qualifizierten, d.h. einfachen Senderelementen gleich ist, welche zur Objekterkennung vorgesehen sind, und wobei zwei Intensitäten niedriger als die eine gleiche sind und sich jeweils von allen anderen Intensitäten unterscheiden. Vorzugsweise sind die ein oder mehreren qualifizierten Empfängerelemente dazu ausgebildet jeweils die gleichen zwei unterschiedlichen Verstärkungen anzuwenden, wobei die höhere Verstärkung der Verstärkung der nicht qualifizierten, d.h. einfachen Empfängerelementen entspricht, welche zur Objekterkennung vorgesehen sind. Vorzugsweise ist die Steuereinrichtung dazu ausgebildet, zwölf Kombinationen zu bilden aus den drei qualifizierten Sender- und Empfangselementen, den zwei insgesamt unterschiedlichen, niedrigeren Intensitäten der qualifizierten Senderelemente und den zwei unterschiedlichen, jeweils gleichen Verstärkungen der Empfängerelemente. Vorzugsweise ist die Steuereinrichtung dazu ausgebildet, diejenigen Intensitäten und Verstärkungen der qualifizierten Sender- und Empfängerelemente für die Objekterkennung zu verwenden, welche den Intensitäten und Verstärkungen von nicht qualifizierten, d.h. einfachen Sender- und/oder Empfängerelementen entsprechen.

Dies kann den Vorteil ausbilden, dass eine sehr feine Auflösung für den Abstandswert zur Verfügung steht.

Vorzugsweise weist das Lichtgitter eine Sendeeinrichtung auf, die dazu ausgebildet ist, den Abstandswert drahtlos zu versenden.

Dies kann den Vorteil ausbilden, dass das Verhalten der Kabinentür ohne Eingriff in die Steuerung und Elektronik des Aufzugs übertragen und ausgewertet werden kann.

Weitere Merkmale der Erfindung sind in den Zeichnungen angegeben.

Die jeweils genannten Vorteile können sich auch für Merkmalskombinationen realisieren, in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:

| | |
|---|---|
| Fig. 1 | Lichtgitter |
| Fig. 2a | Geöffnete Doppelschiebetür einer Aufzugskabine mit Lichtgitter |
| Fig. 2b | Halb geöffnete Doppelschiebetür wie Fig. 2a |
| Fig. 2c | Geschlossene Doppelschiebetür wie Fig. 2a |
| Fig. 3 | Diagramm einer Messkurve |
| Fig. 4 | Diagramm mit allen Messkurven |
| Fig. 5 | Diagramm des Abstandswertes |

### Detaillierte Beschreibung der Zeichnungen:

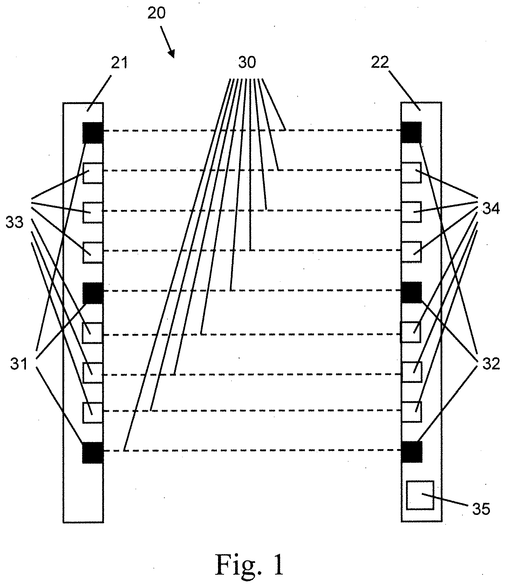

Fig. 1 zeigt ein erfindungsgemässes Lichtgitter 20 mit der Senderleiste 21 und der Empfängerleiste 22. Die Senderleiste 21 weist drei qualifizierte Senderelemente 31 und weitere nicht qualifizierte Senderelemente 33, auf welche IR-Strahlung mit einer bestimmten Intensität aussenden können. Die Empfängerleiste 22 weist drei qualifizierte Empfängerelemente 32 und weitere nicht qualifizierte Empfängerelemente 34 auf. Senderleiste und Empfängerleiste sind jeweils senkrecht und zueinander parallel und in gleicher Höhe gegenüberliegend angeordnet. Jedem qualifizierten Senderelement 31 ist in gleicher Höhe ein qualifiziertes Empfängerelement 32 zugeordnet und zusammen bilden diese einen waagrechen Senderstahl 30 aus. Das Lichtgitter 20 weist zudem eine Steuereinrichtung 35 auf.

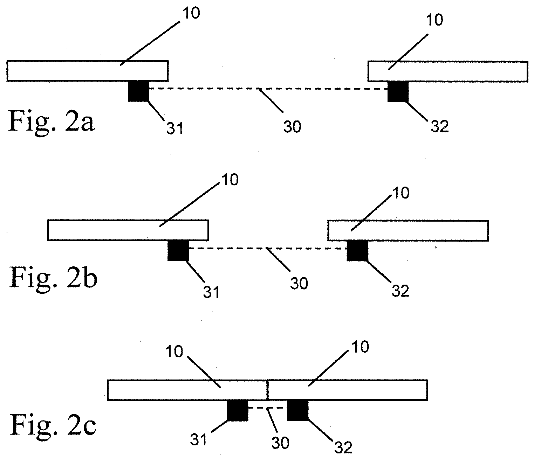

Fig. 2a bis 2c zeigen das Lichtgitter 20 der Fig. 1 an einer Doppelschiebetür 10 einer Aufzugskabine. Die Senderleiste 31 ist an einem Flügel der Doppelschiebetüre befestigt und die Empfängerleiste 32 ist am gegenüberliegenden Flügel der Doppelschiebetür befestigt. Die sonstige Anordnung ist wie in Fig. 1. Senderleiste 31 und Empfängerleiste bewegen sich mit den Doppelschiebetüren mit und bleiben dabei parallel und in gleicher Höhe zueinander angeordnet, sodass die Lichtstrahlen waagrecht und den entsprechenden qualifizierten Sender- und Empfängerelementen zugeordnet verbleiben. Sie verringern ihren Abstand zusammen mit Türen, wenn die Türen sich schliessen, und sie vergrössern ihren Abstand zusammen mit den Türen, wenn die Türen sich öffnen. Der Abstand der Sender- und Empfängerleiste entspricht dem Abstand der beiden Flügel der Doppelschiebetür bis auf einen konstanten Faktor. Fig. 2a zeigt die geöffnete Tür. Fig. 2b zeigt die halb geschlossene Tür. Fig. 2c zeigt die geschlossene Tür.

Die nicht qualifizierten Senderelemente senden mit der Intensität Tx:High und die nicht qualifizierten Empfängerelemente weisen die beiden Verstärkungen Rx:High und Rx:Low auf. Rx:Low ist niedriger als Rx:High. Die Verstärkungen werden gleichzeitig angewendet und getrennt ausgewertet.

Das erste qualifizierte Senderelement T1 kann die Intensität T1:Low1, T1:Mid1, oder T1:High senden, das zweite qualifizierte Senderelement T2 kann die Intensität T2:Low2, T2:Mid2 oder T3:High senden, und das dritte qualifiziere Senderelement T3 kann die Intensität T3:Low3, T3:Mid3 oder T3:High senden. Die Intensitäten Tx:High, T1:High, T2:High und T3:Hight sind gleich gross. Alle anderen Intensitäten sind geringer. Die Abfolge der Stärke der Intensitäten ist aufsteigend: T1:Low1 < T2:Low2 < T3:Low3 < Mid1 < Mid2 < Mid3 < Tx:High. Die drei qualifizierten Empfängerelemente R1, R2, R3 können jeweils die Verstärkungen Rx:Low oder Rx:High anwenden.

Die Steuereinrichtung steuert die nicht qualifizierten Sender- und Empfängerelemente so, dass für Distanzen über 1 m Rx:High und für Distanzen unter 1m wird Rx:Low angewendet wird, letzteres, damit Umspiegelung vermieden werden kann.

Die Steuereinrichtung steuert eine Sequenz von Kombinationen verschiedener Intensitäten und Verstärkungen und wertet diese zur Gewinnung eines Abstandswertes aus. Die höchste Intensität Tx:High wird hierzu nicht verwendet. Die Kombinationen werden jeweils separat angesteuert und ausgewertet. Die Kombinationen sind:
T1:Low1+R1:Low, T1:Mid1+R1:Low, T1:Low1+R1:High, T1:Mid1+R1:High T2:Low2+R2:Low, T2:Mid2+R2:Low, T2:Low2+R2:High, T2:Mid1+R2:High T3:Low3+R3:Low, T3:Mid3+R3:Low, T3:Low3+R3:High, T3:Mid1+R2:High

Dies sind 12 Kombinationen.

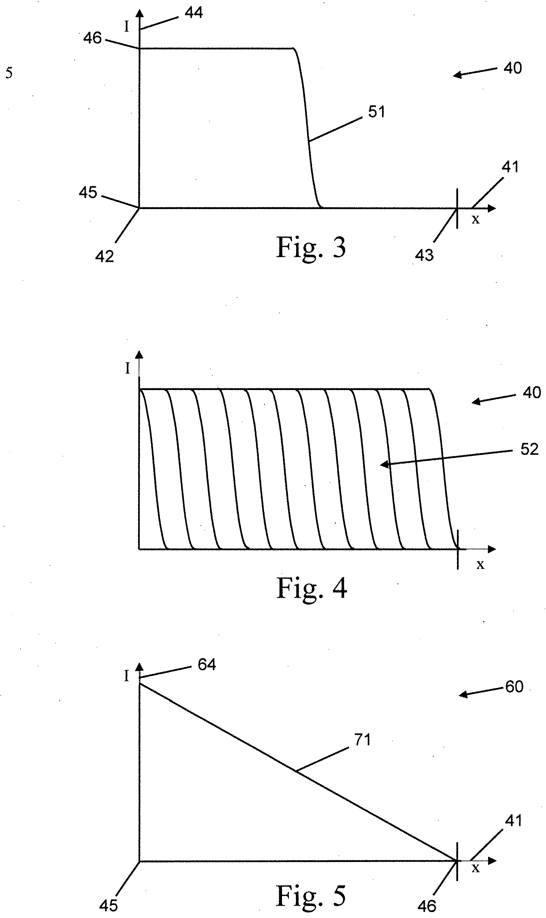

Fig. 3 ist ein Diagramm 40 für die Intensität in Abhängigkeit vom Abstand und zeigt den Messverlauf einer Kombination. Die X-Achse 41 zeigt den Abstand von Senderleiste zu Empfängerleiste. Der Punkt 42 zeigt den minimalen Abstand und der Punkt 43 zeigt dem maximal auswertbaren Abstand. Die Y-Achse 44 zeigt den von einem qualifizierten Empfängerelement ausgegebenen Intensitätswert für eine bestimmte Kombination.

Die Messkurve 51 zeigt beispielhaft eine Kombination mit mittlerer Intensität des qualifizieren Senderelementes und mittlerer Verstärkung des qualifizierten Empfängerelements. Die Messkurve 51 zeigt bei mittlerer Distanz einen sehr steilen Verlauf und ist bei kürzeren Distanzen in Sättigung und bei weiteren Distanzen ohne Signal. Die Messkurve gibt also nur einen kleinen Distanzbereich in guter Auflösung wieder.

Fig. 4 ist ein Diagramm 40 gemäss Fig. 3 und zeigt eine Überlagerung aller zwölf Messkurven 52 für die zwölf Kombinationen.

Die verschiedenen Intensitäten und die Verstärkung Rx:Low sind so gewählt, dass eine weitgehend gleichmässige Abfolge der steilen Verläufe der Messkurven über die Distanz erreicht wird.

Fig. 5 zeigt ein Diagramm für die Summe Intensitätswerte aller zwölf Kombinationen. Die X-Achse ist analog der Fig. 3. Die Y-Achse zeigt die Summe 71 der Intensitätswerte aller zwölf Kombinationen aus Fig. 4. Die Summe zeigt einen weitgehend linearen Verlauf über die gesamte Distanz.

Die Steuereinrichtung addiert die gemessenen und verstärkten Intensitätswerte der zwölf Kombinationen einer Sequenz und gibt einen Abstandswert in Abhängigkeit von der Summe aus. Die Steuereinrichtung wiederholt die Sequenz periodisch und gibt den Abstandswert periodisch aus.

Durch das erfindungsgemässe Lichtgitter kann die Öffnungsbewegung der Kabinentür eines Aufzugs gemessen werden. Ebenso kann der Abstand von beweglichen Begrenzungen eines von einem Lichtvorhang zu überwachenden Durchgangs vom Lichtvorhang selbst gemessen werden.

Das erfindungsgemässe Lichtgitter kann eine Sendereinrichtung aufweisen, welche den Abstandswert drahtlos überträgt, und insbesondere an eine Web Cloud überträgt. Damit stehen die Daten auch für Auswertungen zur Verfügung oder werden für längere Zeit gespeichert, um wie eine Blackbox über Prozessabläufe Auskunft geben zu können. Insbesondere erlaubt dies, eine Aufzugstüre unabhängig von der Aufzugssteuerung zu überwachen.

### Bezugszeichenliste:

- 10: Kabinentür

- 20: Lichtgitter
- 21: Senderleiste
- 22: Empfängerleiste

- 30: Lichtstrahlen
- 31: qualifizierte Senderelemente
- 32: qualifizierte Empfängerelemente
- 33: einfache Senderelemente
- 34: einfache Empfängerelemente
- 35: Steuereinrichtung

- 40: Diagramm der Intensität in Abhängigkeit vom Abstand

- 41: X-Achse: Abstand von Sender- und Empfängerleiste
- 42: Minimalabstand
- 43: Maximalabstand
- 44: Y-Achse: Empfangene und verstärkte Intensität
- 45: Keine Detektion
- 46: Sättigung

- 51: Messkurve für eine Intensität und eine Verstärkung
- 52: 12 Messkurven aus 6 Intensitäten und 2 Verstärkungen
- 60: Diagramm der Summe der empfangenen 12 Messkurven
- 64: Y-Achse: Summe der verstärkten Intensitäten

- 71: Summe der 12 Messkurven von 6 Intensitäten und 2 Verstärkungen

## Patentansprüche

1. Lichtgitter (20) zur Bestimmung des Abstandes zwischen Sender- und Empfängerleiste mit einer Senderleiste (21) mit einem oder mehreren Senderelementen, welche Strahlung mit einer bestimmten Intensität aussenden, mit einer Empfängerleiste (22) mit einem oder mehreren Empfängerelementen, welche die Strahlung eines zugeordneten Senderelements empfangen, und mit einer Steuereinrichtung (35) zur Ansteuerung der Senderelemente und/oder der Empfängerelemente und zur Auswertung der Empfängerelemente, wobei jeweils das Senderelement und das Empfängerelement oder jeweils wenigstens eines der Senderelemente oder wenigstens eines der Empfängerelemente als qualifizierte Sender- und Empfängerelemente ausgebildet sind, wobei das qualifizierte Senderelement (31) oder die qualifizierten Senderelemente dazu ausgebildet sind, unterschiedliche Intensitäten auszusenden und/oder das qualifizierte Empfängerelement (32) oder die qualifizierten Empfängerelemente dazu ausgebildet sind, unterschiedliche Verstärkungen anzuwenden und einen Intensitätswert für die empfangene und verstärkte Strahlung auszugeben, und die Steuereinrichtung dazu ausgebildet ist, unterschiedliche Kombinationen von Intensitäten und Verstärkungen der qualifizierten Sender- oder Empfängerelemente anzusteuern und einen Abstandswert in Abhängigkeit von der Summe der resultierenden Intensitätswerte der angesteuerten Kombinationen zu ermitteln, **dadurch gekennzeichnet, dass** die Steuereinrichtung dazu ausgebildet ist, die Kombinationen nacheinander in einer Sequenz anzusteuern und die Sequenz periodisch zu wiederholen und die Summe von den angesteuerten Kombinationen einer Sequenz zu ermitteln und für jede Sequenz einen Abstandswert zu ermitteln.

2. Lichtgitter nach Anspruch 1, **dadurch gekennzeichnet, dass** das Lichtgitter, insbesondere die Sender- und Empfängerleiste noch mindestens ein oder mehrere weitere Sender- und Empfängerelemente aufweist, die jeweils als nicht qualifizierte Senderelemente (33) und nicht qualifizierte Empfängerelemente (34) ausgebildet sind und welche jeweils als Lichtschranke ausgebildet sind und welche vorzugsweise nicht zu den Kombinationen beitragen oder aus denen nicht der Abstandswert ermittelt wird, oder welche zu Objektdetektion verwendet werden, oder deren nicht qualifizierte Senderelemente mindestens eine Intensität aussenden wie die qualifizierten Senderelemente und deren Empfängerelemente mindestens eine Verstärkung aufweisen wie die qualifizierten Empfängerelemente.

3. Lichtgitter nach Anspruch 2, **dadurch gekennzeichnet, dass** alle unterschiedlichen Kombinationen von Intensitäten und Verstärkungen der qualifizierten Sender- oder Empfängerelemente anzusteuern, jedoch ohne die höchste Intensität der qualifizierten Senderelemente für die Kombinationen zu verwenden, oder diejenigen Intensitäten und Verstärkungen der qualifizierten Sender- und Empfängerelemente für die Objekterkennung zu verwenden welche den Intensitäten und Verstärkungen von nicht qualifizierten Sender- und/oder Empfängerelementen entsprechen.

4. Lichtgitter nach einem der Ansprüche 2 oder 3, **dadurch gekennzeichnet, dass** die ein oder mehreren qualifizierten Senderelemente dazu ausgebildet sind jeweils einzeln mehrere unterschiedliche Intensitäten auszusenden, oder zueinander unterschiedliche Intensitäten auszusenden, oder jeweils eine gleiche Intensität auszusenden, welche insbesondere die höchste Intensität ist und insbesondere der Intensität der nicht qualifizierten Senderelemente entspricht.

5. Lichtgitter nach einem der Ansprüche 2-4, **dadurch gekennzeichnet, dass** die ein oder mehreren qualifizierten Empfängerelemente dazu ausgebildet sind, jeweils einzeln mehrere unterschiedliche Verstärkungen anzuwenden, oder dieselben unterschiedlichen Verstärkungen anzuwenden, oder jeweils eine gleiche Verstärkung anzuwenden, welche insbesondere die höchste ist, und der Verstärkung der einfachen Empfängerelemente entspricht.

6. Lichtgitter nach einem der Ansprüche 2 bis 5, **dadurch gekennzeichnet, dass** das Lichtgitter jeweils drei qualifizierte Sender- und Empfängerelemente aufweist und noch weitere einfache Sender- und Empfängerelemente aufweist, welche nicht zu den Kombinationen beitragen und/oder aus denen nicht der Abstandswert ermittelt wird, die ein oder mehreren qualifizierten Senderelemente dazu ausgebildet sind, jeweils drei Intensitäten auszusenden, wobei eine Intensität der Intensität der einfachen Senderelementen gleich ist, welche zur Objekterkennung vorgesehen sind, und wobei zwei Intensitäten niedriger als die eine gleiche sind und sich jeweils von allen anderen Intensitäten unterscheiden, und die ein oder mehreren qualifizierten Empfängerelemente dazu ausgebildet sind, jeweils die gleichen zwei unterschiedlichen Verstärkungen anzuwenden, wobei die höhere Verstärkung der Verstärkung der einfachen Empfängerelementen entspricht, welche zur Objekterkennung vorgesehen sind, und die Steuereinrichtung dazu ausgebildet ist, zwölf Kombinationen zu bilden aus den drei qualifizierten Sender- und Empfangselementen, den zwei insgesamt unterschiedlichen, niedrigeren Intensitäten der qualifizierten Senderelementen und den zwei unterschiedlichen, jeweils gleichen Verstärkungen der Empfängerelementen und diejenigen Intensitäten und Verstärkungen der qualifizierten Sender- und Empfängerelemente für die Objekterkennung zu verwenden welche den Intensitäten und Verstärkungen von einfachen Sender- und/oder Empfängerelementen entsprechen.

7. Lichtgitter nach einem der Ansprüche 1 bis 6, **dadurch gekennzeichnet, dass** das Lichtgitter eine Sendeeinrichtung aufweist, die dazu ausgebildet ist, den Abstandswert drahtlos zu versenden.

## Claims

1. Light grid (20) for determining the distance between transmitter strip and receiver strip, having a transmitter strip (21) with one or more transmitter elements that emit radiation with a specific intensity, having a receiver strip (22) with one or more receiver elements that receive the radiation from an associated transmitter element and having a control device (35) for driving the transmitter elements and/or the receiver elements and for evaluating the receiver elements, wherein in each case the transmitter element and the receiver element or in each case at least one of the transmitter elements or at least one of the receiver elements are designed as qualified transmitter and receiver elements, wherein the qualified transmitter element (31) or the qualified transmitter elements are designed to transmit different intensities and/or the qualified receiver element (32) or the qualified receiver elements are designed to apply different gains and output an intensity value for the received and amplified radiation, and the control device is designed to drive different combinations of intensities and gains of the qualified transmitter or receiver elements and ascertain a distance value on the basis of the sum of the resultant intensity values of the driven combinations, **characterized in that** the control device is designed to drive the combinations successively in a sequence and repeat the sequence periodically and ascertain the sum of the driven combinations of a sequence and ascertain a distance value for each sequence.

2. Light grid according to Claim 1, **characterized in that** the light grid, in particular the transmitter and receiver strips, furthermore comprises at least one or more further transmitter and receiver elements, which are each designed as non-qualified transmitter elements (33) and non-qualified receiver elements (34) and which are each designed as a light curtain and which preferably do not contribute to the combinations or from which the distance value is not ascertained, or which are used for object detection, or whose non-qualified transmitter elements emit at least one intensity like the qualified transmitter elements and whose receiver elements have at least one gain like the qualified receiver elements.

3. Light grid according to Claim 2, **characterized in that** all different combinations of intensities and gains of the qualified transmitter or receiver elements are driven, without however the highest intensity of the qualified transmitter elements being used for the combinations, or those intensities and gains of the qualified transmitter and receiver elements that correspond to the intensities and gains of non-qualified transmitter and/or receiver elements are used for object recognition.

4. Light grid according to either of Claims 2 and 3, **characterized in that** the one or more qualified transmitter elements are designed to each emit a plurality of different intensities on an individual basis or emit mutually different intensities or each emit an identical intensity, the latter in particular being the highest intensity and in particular corresponding to the intensity of the non-qualified transmitter elements.

5. Light grid according to any of Claims 2-4, **characterized in that** the one or more qualified receiver elements are designed to each apply a plurality of different gains on an individual basis or apply the same different gains or each apply an identical gain, the latter in particular being the highest and corresponding to the gain of the simple receiver elements.

6. Light grid according to any of Claims 2 to 5, **characterized in that** the light grid in each case comprises three qualified transmitter and receiver elements and furthermore comprises simple transmitter and receiver elements that do not contribute to the combinations and/or from which the distance value is not ascertained, the one or more qualified transmitter elements are designed to emit three intensities in each case, wherein one intensity is equal to the intensity of the simple transmitter elements that are provided for object recognition, and wherein two intensities are lower than the identical intensity and in each case differ from all other intensities, and the one or more qualified receiver elements are designed to apply the same two different gains in each case, wherein the higher gain corresponds to the gain of the simple receiver elements that are provided for object recognition, and the control device is designed to form twelve combinations from the three qualified transmitter and receiver elements, the two altogether different, lower intensities of the qualified transmitter elements and the two different, in each case identical gains of the receiver elements and use those intensities and gains of the qualified transmitter and receiver elements that correspond to the intensities and gains of simple transmitter and/or receiver elements for object recognition.

7. Light grid according to any of Claims 1 to 6, **characterized in that** the light grid comprises a transmission device that is designed to send the distance value wirelessly.

## Revendications

1. Barrière lumineuse (20) pour déterminer la distance entre une barre émettrice et une barre réceptrice, comprenant une barre émettrice (21) pourvue d'un ou plusieurs éléments émetteurs, lesquels émettent un rayonnement ayant une intensité déterminée, comprenant une barre réceptrice (22) pourvue d'un ou plusieurs éléments récepteurs, lesquels reçoivent le rayonnement d'un élément émetteur associé, et comprenant un dispositif de commande (35) destiné à commander les éléments émetteurs et/ou les éléments récepteurs et destiné à évaluer les éléments récepteurs, à chaque fois l'élément émetteur et l'élément récepteur ou à chaque fois au moins l'un des éléments émetteurs ou au moins l'un des éléments récepteurs étant réalisés sous la forme d'éléments émetteurs et récepteurs qualifiés, l'élément émetteur qualifié (31) ou les éléments émetteurs qualifiés étant configurés pour émettre des intensités différentes et/ou l'élément récepteur qualifié (32) ou les éléments récepteurs qualifiés étant configurés pour appliquer des amplifications différentes et pour délivrer une valeur d'intensité pour le rayonnement reçu et amplifié, et le dispositif de commande étant configuré pour commander différentes combinaisons d'intensités et d'amplifications des éléments émetteurs ou récepteurs qualifiés et pour déterminer une valeur de distance en fonction de la somme des valeurs d'intensité résultantes des combinaisons commandées, **caractérisée en ce que** le dispositif de commande est configuré pour commander les combinaisons les unes après les autres dans une séquence et pour répéter périodiquement la séquence, et pour déterminer la somme des combinaisons commandées d'une séquence et pour déterminer une valeur de distance pour chaque séquence.

2. Barrière lumineuse selon la revendication 1, **caractérisée en ce que** la barrière lumineuse, notamment la barre émettrice et la barre réceptrice, possède encore au moins un ou plusieurs éléments émetteurs et récepteurs supplémentaires, qui sont respectivement réalisées sous la forme d'éléments émetteurs non qualifiés (33) et d'éléments récepteurs non qualifiés (34) et qui sont respectivement réalisés sous la forme d'une barrière photoélectrique et qui, de préférence, ne contribuent pas aux combinaisons ou à partir desquels la valeur de distance n'est pas déterminée, ou qui sont utilisés pour la détection d'objets, ou dont les éléments émetteurs non qualifiés émettent au moins une intensité comme les éléments émetteurs qualifiés et dont les éléments récepteurs présentent au moins une amplification comme les éléments récepteurs qualifiés.

3. Barrière lumineuse selon la revendication 2, **caractérisée en ce que** toutes les combinaisons différentes d'intensités et d'amplifications des éléments émetteurs ou récepteurs qualifiés sont commandées, sans toutefois utiliser l'intensité la plus élevée des éléments émetteurs qualifiés pour les combinaisons, ou en utilisant pour la détection d'objets les intensités et amplifications des éléments émetteurs et récepteurs qualifiés qui correspondent aux intensités et amplifications des éléments émetteurs et/ou récepteurs non qualifiés.

4. Barrière lumineuse selon l'une des revendications 2 ou 3, **caractérisée en ce que** le ou les éléments émetteurs qualifiés sont configurés pour émettre à chaque fois individuellement plusieurs intensités différentes, ou pour émettre des intensités différentes entre elles, ou pour émettre respectivement une intensité identique, laquelle est notamment l'intensité la plus élevée et correspond notamment à l'intensité des éléments émetteurs non qualifiés.

5. Barrière lumineuse selon l'une des revendications 2 à 4, **caractérisée en ce que** le ou les éléments récepteurs qualifiés sont configurés pour appliquer à chaque fois individuellement plusieurs amplifications différentes, ou pour appliquer les mêmes amplifications différentes, ou pour appliquer à chaque fois une amplification identique, laquelle est notamment la plus élevée et qui correspond à l'amplification des éléments récepteurs simples.

6. Barrière lumineuse selon l'une des revendications 2 à 5, **caractérisée en ce que** la barrière lumineuse possède respectivement trois éléments émetteurs et récepteurs qualifiés et possède encore des éléments émetteurs et récepteurs simples supplémentaires, lesquels ne contribuent pas aux combinaisons et/ou à partir desquels la valeur de distance n'est pas déterminée, l'un ou les plusieurs éléments émetteurs qualifiés étant configurés pour émettre respectivement trois intensités, une intensité étant égale à l'intensité des éléments émetteurs simples qui sont prévus pour la détection d'objets et deux intensités étant inférieures à cette intensité égale et se distinguant respectivement de toutes les autres intensités, et l'un ou les éléments récepteurs qualifiés étant configurés pour appliquer respectivement les deux mêmes amplifications différentes, l'amplification la plus élevée correspondant à l'amplification des éléments récepteurs simples qui sont prévus pour la détection d'objets, et le dispositif de commande étant configuré pour former douze combinaisons à partir des trois éléments émetteurs et récepteurs qualifiés, des deux intensités les plus faibles globalement différentes des éléments émetteurs qualifiés et des deux amplifications différentes, respectivement identiques, des éléments récepteurs, et d'utiliser pour la détection d'objets les intensités et amplifications des éléments émetteurs et récepteurs qualifiés qui correspondent aux intensités et amplifications des éléments émetteurs et/ou récepteurs simples.

7. Barrière lumineuse selon l'une des revendications 1 à 6, **caractérisée en ce que** la barrière lumineuse possède un dispositif émetteur qui est configuré pour transmettre sans fil la valeur de distance.
